# EUROPÄISCHE PATENTSCHRIFT

(11) **EP 1 245 110 B1**
(45) Veröffentlichungstag und Bekanntmachung des Hinweises auf die Patenterteilung: **22.09.2004**
(21) Anmeldenummer: 00972627.4
(22) Anmeldetag: 10.10.2000
(51) Int. Cl.: H04N 5/225

(54) **KAMERA MIT EINEM OBJEKTIV UND EINEM SENSOR**
CAMERA WITH AN OBJECTIVE AND A SENSOR
CAMERA MUNIE D'UN OBJECTIF ET D'UN DETECTEUR

(30) Priorität: 14.10.1999 DE 19949515
(43) Veröffentlichungstag der Anmeldung: 02.10.2002
(73) Patentinhaber: ROBERT BOSCH GMBH, 70442 Stuttgart (DE)
(72) Erfinder: PÖCHMÜLLER, Werner, 31139 Hildesheim (DE); ECKERL, Klaus, 94116 Hutthurm (DE)
(86) Internationale Anmeldenummer: PCT/DE2000/003561
(87) Internationale Veröffentlichungsnummer: WO 2001/028234

(56) Entgegenhaltungen:
- EP-A- 0 990 933
- PATENT ABSTRACTS OF JAPAN vol. 010, no. 308 (P-508), 21. Oktober 1986 (1986-10-21) -& JP 61 121019 A (OLYMPUS OPTICAL CO LTD), 9. Juni 1986 (1986-06-09)

## Beschreibung

### Stand der Technik

Die Erfindung geht aus von der Gattung, wie sie im unabhängigen Patentanspruch 1 angegeben ist. Derartige Kameras werden zum Beispiel in Kraftfahrzeugen zur Überwachung des Verkehrsgeschehens oder als Hilfe beim Rückwärtsfahren eingesetzt.

Bei einer derartigen Kamera wird das durch das Objektiv auf den opto/elektronischen Sensor projizierte Bild durch den Sensor in ein das Bild darstellendes elektrisches Signal, ein sogenanntes Videosignal, umgewandelt. Bisher verfügbare CCD-Sensoren haben nur eine relativ geringe Helligkeitsdynamik und sind somit nicht in der Lage, für eine geringe und eine hohe Umgebungshelligkeit jeweils ein brauchbares Videosignal zu erzeugen. Damit der Sensor bei allen in der Praxis auftretenden Helligkeitswerten der aufgenommenen Szene immer innerhalb seiner engen Helligkeitsdynamik ausgesteuert wird, ist es daher notwendig, das Objektiv mit einer steuerbaren Blende und/oder einer Steuerung der Belichtungszeit zu versehen. Eine derartige Blende wird bei geringer Umgebungshelligkeit geöffnet, um eine große Lichtmenge zu dem Sensor durchzulassen, und bei hoher Umgebungshelligkeit geschlossen, um eine geringere Lichtmenge zu dem Sensor durchzulassen.
Derartige Lösungen stellen einen zusätzlichen Aufwand für die Blende oder die Belichtungssteuerung sowie deren Steuerschaltungen dar und bewirken je nach Helligkeit einen mehr oder weniger großen Verlust der eintreffenden Lichtmenge.

Aus der WO 99/28779 ist ein Objektiv bekannt, das Mittel zur Unterdrückung von Streulicht aufweist.

In Taeymans D: ,CMOS ODER CCD', F & M FEINWERKTECHNIK MIKROTECHNIK MIKROELEKTRONIK, DE, CARL HANSER GMBH & CO, Bd. 106, Nr. 4, 1. April 1998, Seiten 251-254 ist eine Kamera mit einem CMOS-Sensor mit einer logarithmischen Wandelkennlinie beschrieben.

Die EP 0 585 186 A2 offenbart ein Objektiv mit Mitteln zur Unterdrückung von Streulicht.

Aus dem Abstract der japanischen Offenlegungsschrift JP 61 121019 A vom 9. Juni 1986 ist ein Objektiv mit einer Linse bekannt, wobei der Außendurchmesser der Linse kleiner ist als der Innendurchmesser der Linsenhalterung, um Spannungen in der Linse infolge thermischer Ausdehnung zu reduzieren.

In der Kameratechnik wurden in den letzten Jahren Halbleitersensoren mit einer extrem hohen Helligkeitsdynamik mit Werten von 120 dB und mehr entwickelt.

Derartige Sensoren können ohne Änderung einer Blende oder Belichtungszeit eine Umgebungshelligkeit bei Nachtszenen ebenso verarbeiten wie eine Umgebungshelligkeit bei einem mediterranen Sonnentag. Steuerbare Blenden und eine Belichtungssteuerung zur Anpassung der auf den Sensor gelangenden Lichtmenge an die Helligkeitsdynamik des Sensors werden dann nicht mehr benötigt.

Wenn die steuerbare Blende zur Steuerung der auf den Sensor gelangenden Lichtmenge nicht mehr vorhanden ist, fällt bei jedem Wert der Umgebungshelligkeit die gesamte Lichtmenge in das Objektiv ein. Dadurch kommt es in der Praxis bei großer Umgebungshelligkeit in dem Objektiv zu starken Lichtstreuungen und Spiegelungen, insbesondere durch Reflexionen an Grenzflächen zwischen Glas und Luft, die zu Geisterbildern in dem von dem Sensorsignal erzeugten Bild führen. Für eine Kamera mit den genannten Sensoren mit hoher Helligkeitsdynamik und ohne Blenden- oder Belichtungssteuerung wird daher eine Optik benötigt, die auch bei starkem Lichteinfall nur geringe Lichtstreueffekte aufweist. Derartige Objektive sind jedoch bisher nicht verfügbar.

### Vorteile der Erfindung

Der Anmeldungsgegenstand mit den Merkmalen des Patentanspruchs 1 hat folgende Vorteile: Es wird eine Kamera mit einer hohen Helligkeitsdynamik geschaffen, die einerseits ohne Steuerung der in das Objektiv einfallenden Lichtmenge durch Steuerung einer Blende oder der Belichtungszeit über den gesamten Bereich der Helligkeitsdynamik des Umgebungslichtes einwandfrei arbeitet und bei der trotzdem bisher auftretende Lichtstreueffekte, Spiegelungen in dem Objektiv und dadurch bedingte Geisterbilder in dem wiedergegebenen Bild vermieden werden. Durch die Erfindung können also die Vorteile der neuartigen Sensoren mit einer hohen Helligkeitsdynamik voll ausgenutzt werden, ohne daß dabei Nachteile durch Lichtstreuungen und Spiegelungen auftreten. Durch die Kombination des Sensors mit einem hohen Dynamikbereich und des Objektivs mit Mitteln zur Verringerung von Streulicht sind extrem einfache und robuste Kameras realisierbar, die weder eine Belichtungszeit- noch eine Blendensteuerung benötigen und bei denen trotzdem auch bei dem höchsten Helligkeitswert des einfallenden Lichtes keine Streuungen und Reflexionen auftreten, die in dem wiedergegebenen Bild zu sichtbaren Störungen führen. Eine erfindungsgemäße Kamera kann somit zum Beispiel sowohl in mediterraner sonniger Umgebung und in der Produktionstechnik zum Blick in einen leuchtenden Plasmabogen eingesetzt werden.

Vorteilhafte Weiterbildungen der Erfindung sind in den abhängigen Ansprüchen angegeben.

### Zeichnungen

Verschiedene Ausführungsbeispiele der Erfindung sind in den Zeichnungen dargestellt und werden in der nachfolgenden Beschreibung näher erläutert. In der Zeichnung zeigen
Figur 1 eine Kamera gemäß einer ersten Ausführungsform der Erfindung,
Figur 2 eine Kamera gemäß einer zweiten Ausführungsform der Erfindung,
Figur 3 eine Weiterbildung der Kamera gemäß Figur 2 und
Figur 4 die Wandelkennlinie des Sensors, das heißt die Abhängigkeit der Amplitude des von dem Sensor gelieferten elektrischen Signals oder Videosignals von der Intensität des auf den Sensor auftreffenden Lichtes.

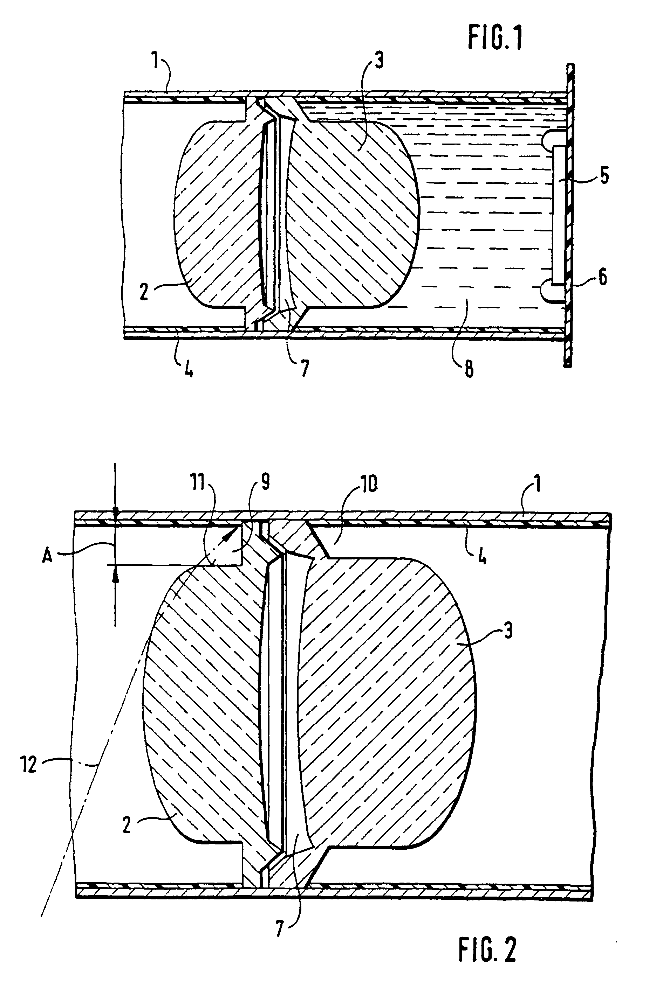

Figur 1 zeigt für eine Kamera eine zylinderförmige mechanische Halterung 1. In der Halterung 1 sind eine äußere Linse 2, eine innere, sensomahe Linse 3 und ein Bildsensor 5 gelagert. Der Bildsensor 5 ist auf ein Substrat 6 aufgebracht und dient zur Erzeugung des elektrischen Signals aus dem Bild, das durch das Objektiv mit den Linsen 2, 3 auf den Sensor 5 projiziert wird. Zwischen den Linsen 2, 3 befindet sich ein Luftzwischenraum 7. Der Zwischenraum zwischen der inneren Linse 3 und dem Sensor 5, der normalerweise auch ein Luftzwischenraum ist, ist mit einem optischen Gel 8 oder einer optischen Flüssigkeit ausgefüllt. Ein derartiges Gel hat einen Brechungsindex, der dem Brechungsindex des Glasmaterials der Linsen weitestgehend angepaßt ist. Dadurch werden bisher auftretende Brechungen, Reflexionen und Streuungen an der Grenzfläche zwischen Glas und Luft weitestgehend vermieden oder stark verringert. Ein Lichtstrahl verläuft dann von der Linse 3 zu dem Sensor 5 etwa so, als wäre der Zwischenraum zwischen Linse 3 und Sensor 5 auch mit Glas ausgefüllt oder gar nicht vorhanden. Zusätzlich kann auch der Luftzwischenraum 7 zwischen der äußeren Linse 2 und der inneren Linse 3 mit einem optischen Gel oder einer optischen Flüssigkeit ausgefüllt sein. Die Innenwandung der Halterung 1 ist mit einem rauhen schwarzen,auftretendes Licht weitestgehend absorbierenden Belag 4, zum Beispiel einer Polymerschicht, versehen, damit auf die Innenwandung des Gehäuses 1 auftreffendes Streulicht möglichst absorbiert und nicht in das optische System zurückreflektiert wird.

Figur 2 zeigt wieder das Objektiv mit den beiden Linsen 2, 3. Zwischen einem äußeren Umfangsbereich der Linsen 2, 3 und der Innenwandung der mechanischen Halterung 7 bzw. dem schwarzen Belag 4 ist jeweils ein Abstand oder sogenannter Freiraum 9, 10 mit einer Weite A in der Größenordnung von einem Millimeter vorgesehen. Die Oberflächen der Linsen 2, 3 im Bereich der Freiräume 9, 10 sind wie die optisch wirksamen Oberflächen der Linsen glatt poliert. Ein schräg auf die Linse 2 auftreffender Lichtstrahl 12 verläßt die Linse 2 an der Oberfläche 11 unter einer gewissen Brechung, tritt dann in den Freiraum 9 ein und erst dann auf den schwarzen Belag 4 der Halterung 1. Dort wird der Lichtstrahl an dem rauhen, schwarzen, hochgradig lichtabsorbierenden Belag 4 weitestgehend absorbiert. Aufgrund des fehlenden Kontaktes zwischen der Innenwandung der Halterung 1 und der Linsenoberfläche im Bereich der Freiräume 9, 10 kann die Halterung 1 mit weniger Einschränkungen beschichtet werden. Außerdem besteht eine größere Freiheit zur Gestaltung der Fassungsoberfläche.

Figur 3 zeigt eine vorteilhafte Weiterbildung des Objektivs gemäß Figur 2. Jeweils im Bereich der Freiräume 9, 10 ist die zylinderförmige Halterung 1 mit umlaufenden, radial nach außen weisenden Erweiterungen 13, 14 versehen, die umlaufende, zum Inneren der Halterung 1 offene Kammern 15, 16 bilden. Der Belag 4 erstreckt sich jeweils auch über die die Kammern bildenden Oberflächen der die Erweiterungen. Die Kammer 15 hat einen dreieckförmigen Querschnitt mit einer Seite 17 senkrecht zur optischen Achse und einer Seite 18 schräg zur optischen Achse. Die Kammer 16 im Bereich des Freiraums 10 ist entsprechend ausgebildet. Die Weite der Öffnung der Kammer 15 oder 16 in Richtung der optischen Achse ist dabei im wesentlichen der Länge der Linse 2, 3 in Richtung der optischen Achse angepaßt, damit möglichst alles von der Linse ausgehendes Streulicht in die Kammer 15 oder 16 gelangt.

Die Wirkung der Erweiterung ist folgendermaßen: Der Lichtstrahl 12, der die Oberfläche 11 der Linse 2 nach einer gewissen Brechung verläßt und störendes Streulicht darstellt, gelangt in das Innere der durch die Erweiterung 13 gebildeten Kammer 15. Der Strahl 12 wird dort an dem Belag 4 mehrfach reflektiert und dadurch so stark gedämpft, daß er die Kammer 15 nicht mehr oder nur mit einer sehr geringen Amplitude wieder verläßt. Dadurch, daß der Lichtstrahl 12 innerhalb der Kammer 15 mehrfach auf die absorbierende Schicht 4 auftreffen kann, wird die Wahrscheinlichkeit einer Rückreflexion des Lichtstrahls 12 zu der Linse 2 beträchtlich verringert. Die umlaufende Kammer 15 wirkt also gewissermaßen als eine umlaufende Lichtfalle für von den Linsen kommendes Streulicht, das sonst in unerwünschter Weise durch Reflexionen auf den Sensor gelangen und im wiedergegebenen Bild Geisterbilder hervorrufen könnte. Auch bei dieser Anordnung können der Zwischenraum 7 zwischen den Linsen 2 und 3 und der Zwischenraum zwischen der Linse 3 und dem in Figur 3 nicht dargestellten Sensor mit einem optischen Gel oder einer optischen Flüssigkeit ausgefüllt sein.

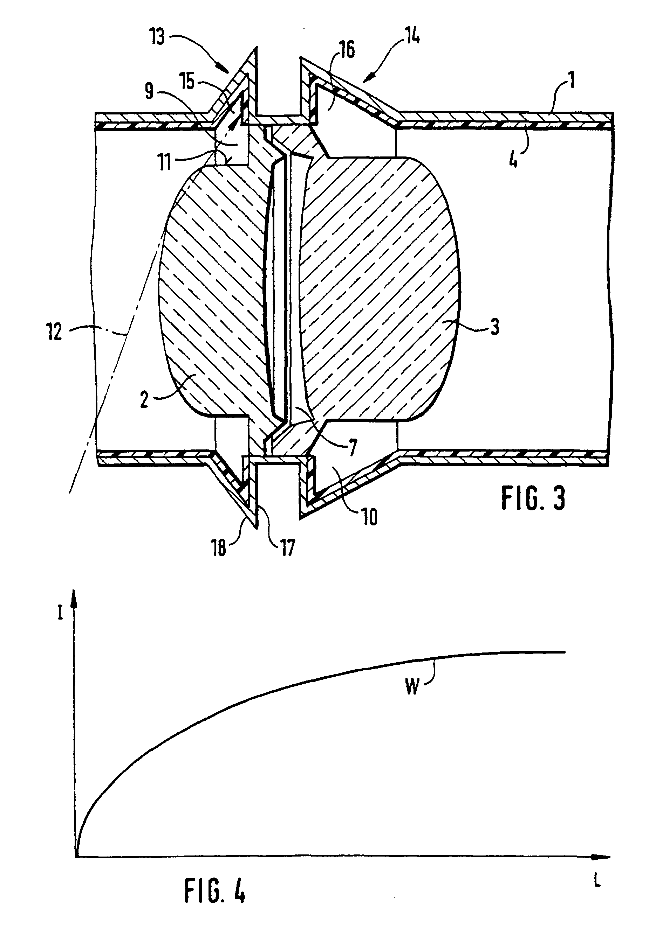

Figur 4 zeigt die Wandelkennlinie W des das Videosignal liefernden Sensors 5, das heißt die Abhängigkeit der Amplitude I des vom Sensor gelieferten elektrischen Signals oder Videosignals in Abhängigkeit von der auf den Wandler 5 auftreffenden Lichtstärke L. Die dargestellte Kennlinie hat einen logarithmischen Verlauf, wodurch die hohe Helligkeitsdynamik des Sensors erzielt wird. Der dargestellte Bereich der Lichtstärke L auf der X-Achse reicht dabei zum Beispiel von einer sehr geringen Helligkeit bei Nachtszenen bis zu einer hohen Helligkeit bei einem mediterranen Sonnentag.

Eine weitere Verringerung der Lichtstreuung und Spiegelungen kann dadurch erreicht werden, daß die dem Sensor nächstliegende Linse des Objektivs in einem sehr geringen Abstand zu dem Sensor angeordnet ist. Vorzugsweise wird die Zahl der Linsen des Objektivs auf eine Mindestzahl von vorzugsweise zwei beschränkt, um möglichst wenig Übergänge zwischen einer Glasoberfläche und Luft oder einem anderen Medium mit einem anderen Brechungsindex zu erreichen. Vorzugsweise ist das Objektiv telezentrisch ausgebildet. Das bedeutet, daß die Lichtstrahlen über den gesamten Bereich senkrecht auf die Objektivoberfläche auftreffen, also ein im wesentlichen paralleles Strahlenbündel darstellen.

## Patentansprüche

1. Kamera mit einem Objektiv und einem Sensor (5) zum Umsetzen des auf den Sensor projizierten Bildes in ein elektrisches Signal, wobei der Sensor (5) eine nichtlineare Wandelkennlinie (W) und eine hohe, der Helligkeitsdynamik des einfallenden Lichtes angepasste Helligkeitsdynamik hat,
**dadurch gekennzeichnet dass**
das Objektiv (2, 3) Mittel zur Verringerung von Spiegelungen und Streulicht aufweist, wobei jeweils zwischen einem äußeren Umfangsbereich (11) einer Linse (2) des Objektivs und einer die Linse (2) umgebenden Halterung (1) ein Freiraum (9) vorgesehen ist, wobei eine die Linsen (2, 3) umgebende Halterung (1) an der Stelle des Freiraums (9, 10) mit einer radial nach außen weisenden Erweiterung (13, 14) versehen ist, die eine umlaufende, zum Inneren offene Kammer (15, 16) bildet.

2. Kamera nach Anspruch 1,
**dadurch gekennzeichnet, dass** die nichtlineare Wandelkennlinie (W) eine logarithmische Kennlinie ist.

3. Kamera nach Anspruch 1,
**dadurch gekennzeichnet, dass** der Zwischenraum zwischen der dem Sensor (5) nächstliegenden Linse (3) des Objektivs und dem Sensor (5) mit einem optischen Gel (8) oder einer optischen Flüssigkeit ausgefüllt ist.

4. Kamera nach Anspruch 1,
**dadurch gekennzeichnet, dass** weitere Zwischenräume zwischen den Linsen (2, 3) des Objektivs, dem Sensor (5) und deren Halterungsbauteilen (1) mit einem optischen Gel (8) oder einer optischen Flüssigkeit ausgefüllt sind.

5. Kamera nach Anspruch 1,
**dadurch gekennzeichnet, dass** der Umfangsbereich der Linse (2, 3) im Bereich des Freiraums (9, 10) poliert ist.

6. Kamera nach Anspruch 1,
**dadurch gekennzeichnet, dass** in Richtung der optischen Achse versetzt mehrere Freiräume (9, 10) für voneinander getrennte Linsen (2, 3) des Objektivs vorgesehen sind.

7. Kamera nach Anspruch 1,
**dadurch gekennzeichnet, dass** die die Kammer (15, 16) bildenden Oberflächen der Erweiterung (13, 14) mit einem schwarzen, lichtabsorbierenden Belag (4) versehen sind.

8. Kamera nach Anspruch 1,
**dadurch gekennzeichnet, dass** die Kammer (15, 16) einen dreieckförmigen Querschnitt hat.

9. Kamera nach Anspruch 8,
**dadurch gekennzeichnet, dass** eine erste Seite (17) des Dreiecks senkrecht und eine zweite Seite (18) des Dreiecks schräg zur optischen Achse der Anordnung steht.

10. Kamera nach Anspruch 1,
**dadurch gekennzeichnet, dass** die dem Sensor (5) nächstliegende Linse (3) des Objektivs in einem geringen Abstand zu dem Sensor (5) liegt.

11. Kamera nach Anspruch 1,
**dadurch gekennzeichnet, dass** die Zahl der Linsen (2, 3) des Objektivs auf zwei beschränkt ist.

12. Kamera nach Anspruch 1,
**dadurch gekennzeichnet, dass** das Objektiv telezentrisch ausgebildet ist.

## Claims

1. Camera having an objective and a sensor (5) for converting the image projected onto the sensor into an electric signal, the sensor (5) having a non linear conversion characteristic (W) and a high brightness dynamics adapted to the brightness dynamics of the incident light,
**characterized**
**in that** the objective (2, 3) has means for reducing reflections and scattered light, a free space (9) being provided in each case between an outer peripheral region (11) of a lens (2) of the objective and a holder (1) surrounding the lens (2), a holder (1) surrounding the lenses (2, 3) being provided at the location of the free space (9, 10) with an extension (13, 14) which points radially outwards and forms a circumferential chamber (15, 16) open towards the interior.

2. Camera according to Claim 1,
**characterized in that** the non linear conversion characteristic (W) is a logarithmic characteristic.

3. Camera according to Claim 1,
**characterized in that** the interspace between the lens (3), situated closest to the sensor (5), of the objective and the sensor (5) is filled up with an optical gel (8) or an optical liquid.

4. Camera according to Claim 1,
**characterized in that** further interspaces between the lenses (2, 3) of the objective, the sensor (5) and their holder components (1) are filled up with an optical gel (8) or an optical liquid.

5. Camera according to Claim 1,
**characterized in that** the peripheral region of the lenses (2, 3) is polished in the region of the free space (9, 10).

6. Camera according to Claim 1,
**characterized in that** a number of free spaces (9, 10) for mutually separated lenses (2, 3) of the objective are provided in a fashion offset in the direction of the optical axis.

7. Camera according to Claim 1,
**characterized in that** the surfaces of the extension (13, 14) which form the chamber (15, 16) are provided with a black, light-absorbing coating (4).

8. Camera according to Claim 1,
**characterized in that** the chamber (15, 16) has a triangular cross section.

9. Camera according to Claim 8,
**characterized in that** a first side (17) of the triangle is perpendicular, and a second side (18) of the triangle is inclined to the optical axis of the arrangement.

10. Camera according to Claim 1,
**characterized in that** the lens (3) of the objective situated closest to the sensor (5) is at a slight spacing from the sensor (5).

11. Camera according to Claim 1,
**characterized in that** the number of lenses (2, 3) of the objective is limited to two.

12. Camera according to Claim 1,
**characterized in that** the objective is of telecentric design.

## Revendications

1. Caméra comprenant un objectif et un détecteur (5) destiné à convertir l'image projetée sur le détecteur en un signal électrique, le détecteur (5) possédant une caractéristique de conversion non linéaire (W) et une haute dynamique de luminosité adaptée à la dynamique de luminosité de la lumière incidente,
**caractérisée en ce que**
l'objectif (2, 3) présente des moyens pour réduire les réflexions et la lumière parasite, avec un espace libre (9) prévu entre une région périphérique extérieure (11) de chaque lentille (2) de l'objectif et une monture (1) qui entoure la lentille (2), la monture (1) qui entoure les lentilles (2, 3) étant munie, à l'emplacement de l'espace libre (9, 10) d'un élargissement (13, 14) dirigé radialement vers l'extérieur et qui forme une chambre périphérique (15, 16) ouverte vers l'intérieur.

2. Caméra selon la revendication 1,
**caractérisée en ce que**
la caractéristique de conversion non linéaire (W) est une caractéristique logarithmique.

3. Caméra selon la revendication 1,
**caractérisée en ce que**
l'espace intermédiaire entre la lentille (3) de l'objectif qui est la plus rapprochée du détecteur (5) et le détecteur (5) est rempli d'un gel optique (8) ou d'un liquide optique.

4. Caméra selon la revendication 1,
**caractérisée en ce que**
d'autres espaces intermédiaires compris entre les lentilles (2, 3) de l'objectif, le détecteur (5) et les éléments de monture (1) de ces derniers sont remplis d'un gel optique (8) ou d'un liquide optique.

5. Caméra selon la revendication 1,
**caractérisée en ce que**
la région périphérique de la lentille (2, 3) est polie dans la région de l'espace libre (9, 10).

6. Caméra selon la revendication 1,
**caractérisée en ce que**
plusieurs espaces libres (9, 10) pour des lentilles (2, 3) de l'objectif qui sont séparées l'une de l'autre sont prévus décalés dans la direction de l'axe optique.

7. Caméra selon la revendication 1,
**caractérisée en ce que**
les surfaces de l'élargissement (13, 14) qui forme la chambre (15, 16) sont munies d'un revêtement noir (4) qui absorbe la lumière.

8. Caméra selon la revendication 1,
**caractérisée en ce que**
la chambre (15, 16) a une section triangulaire.

9. Caméra selon la revendication 8,
**caractérisée en ce que**
un premier côté (17) du triangle s'étend perpendiculairement à l'axe optique du dispositif et un deuxième côté (18) du triangle s'étend obliquement à l'axe optique.

10. Caméra selon la revendication 1,
**caractérisée en ce que**
la lentille (3) de l'objectif qui est la plus rapprochée du détecteur (5) se trouve à une petite distance du détecteur (5).

11. Caméra selon la revendication 1,
**caractérisée en ce que**
le nombre des lentilles (2, 3) de l'objectif est limité à deux.

12. Caméra selon la revendication 1,
**caractérisée en ce que**
l'objectif est télécentrique.
